(19) Europäisches Patentamt
European Patent Office
Office européen des brevets

(11) Publication number: **0 156 460**
**B1**

(12) # EUROPEAN PATENT SPECIFICATION

(45) Date of publication of patent specification: **18.10.89**

(51) Int. Cl.$^4$: **G 11 B 7/135**

(21) Application number: **85300594.0**

(22) Date of filing: **29.01.85**

(54) **Pick-up arm for an optical disk player.**

(30) Priority: **31.01.84 JP 16263/84**
**24.08.84 JP 175931/84**
**24.08.84 JP 175932/84**

(43) Date of publication of application:
**02.10.85 Bulletin 85/40**

(45) Publication of the grant of the patent:
**18.10.89 Bulletin 89/42**

(84) Designated Contracting States:
**DE FR GB**

(56) References cited:
**DE-A-3 344 262**
**JP-A-5 034 507**
**US-A-4 004 081**
**US-A-4 260 858**

**PATENT ABSTRACTS OF JAPAN, vol. 7, no. 270, 2nd December 1983, page (P-240) (1415); & JP-A-58-150146**

(73) Proprietor: **Matsushita Electric Industrial Co., Ltd.**
**1006, Oaza Kadoma**
**Kadoma-shi Osaka-fu, 571 (JP)**

(72) Inventor: **Wakabayashi, Noriaki**
**21-46, Higashimotomachi**
**Hirakata-shi Osaka-fu 573 (JP)**
Inventor: **Ishibashi, Hiromachi**
**6-14-28, Toneyama**
**Toyonaka-shi Osaka-fu 560 (JP)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 156 460 B1

## Description

This invention relates to an optical disk drive apparatus used for data or information memory systems for recording onto and playing back from the surface of a disk recording medium data signals by using a light beam such, for example, as a laser beam. More particularly, the invention relates to an optical pick-up head actuator which carries an optical system, and guides a light beam to a target recording track of an optical disk.

Conventional optical disk drive apparatus is provided with a focusing actuator for moving an objective lens in a direction perpendicular to a recording surface of an optical disk to focus a light beam (e.g. laser beam) upon the recording surface; a tracking actuator for moving the objective lens in a direction parallel to the plane of the disk and transversal to the recording tracks to let the light beam follow a target track; and a seeking actuator (ordinary linear motor) for carrying an optical pick-up head block, which includes the focusing actuator, the tracking actuator and other optical components and devices (such as a mirror a prism, a semi-conductor laser and a detector) in a direction radial of the disk for seeking the target track to be read or written. The weight of the optical pick-up head block is usually heavy because of some heavy components mounted thereon, especially magnetic circuits of the focusing and tracking actuators. The total moving mass including the mass of means for carrying the optical pick-up head block in the seeking actuator is estimated 200 to 1000 gram. Therefore, it is very difficult for the conventional apparatus to achieve high speed track access. Supposing the optical pick-up head block be carried by the acceleration of 10G (G is the acceleration of gravity), powerful thrust about 20—100N (Newton) would be required to the seeking actuator. A linear voice coil motor, for example, meets this requirement, but it is very large in size and weight. With these actuators, the optical disk drive apparatus would be hardly made compact or light, and will hardly diminish power dissipation.

On the other hand, the large acceleration for achieving high speed access to the target track brings about various difficulties. The objective lens is usually suspended by flexible members in the magnetic circuit of the focusing actuator to be moved smoothly in the direction perpendicular to the disk surface, and also usually suspended by other flexible members directly or indirectly (through the focusing actuator) in the magnetic circuit of the tracking actuator to be moved smoothly as well in the direction of track crossing. Therefore, the large acceleration causes the objective lens to vibrate furiously. This makes the optical axis of the objective lens incline transiently, and continue vibrating for a while after access. Consequently, with the large acceleration the optical system becomes unstable, for example, unable to focus, taking a long setting time after access.

Another prior art approach to the optical pick-up head block is shown in Japanese Laid-open Application 50-34507 by Koizumi for an optical disk drive. Koizumi proposes an optical pick-up head block that can achieve compactness and low-weight for moving portions, and that can easily replace a laser beam source. Embodying the objective above, the laser beam source is mounted on the stationary portions, and the optical pick-up head block comprises a vacant prop and a vacant arm which is attached to the prop. The vacant arm is able to rotate around the axis of the prop, and is equipped with optical devices such as lenses, prisms, and mirrors. The laser beam passes through the vacant prop. In spite of these proposals, there still exist many difficulties for high speed track access. One is that the moving portions' mass is still large, because the vacant arm includes many optical components and a focusing means (for example, a focusing actuator) which is not mentioned. Another is that high stiffness is hardly achieved with the vacant arm, because the vacant arm having low weight has to be composed of thin and light materials. Therefore, the powerful acceleration causes the moving portions including the arm to vibrate seriously. Moreover, by lack of stiffness, fine trackability cannot be achieved by the closed-loop servo control for track following.

Japanese Laid-Open Application 58-150146 discloses another type optical pick-up head block which has a laser beam source mounted on a stationary portion, an objective mounted on a movable portion for track seeking, and an optical fiber for optically connecting the objective lens and the stationary portion. This proposal would extremely reduce the mass of the moving portion, but cannot solve the problem of stiffness. Worse still, the optical fiber, which is made of thin glass or plastic material, is very fragile. Since the optical fiber is bent or stretched repeatedly during the track seeking operations, it would soon be broken by fatigue.

An object of the present invention is to provide an optical disk drive apparatus which has a remarkably reduced moving mass (inertia) thereby to achieve high speed access to a target track.

Another object is to achieve high stiffness for the optical pick-up head block, and to be free from vibration of the optical systems and free from inclination of the axis of the objective lens when a large acceleration is worked.

Still another object is to achieve high stability and fine trackability for focusing and tracking performance.

A further object is to provide an optical disk drive apparatus which has a compact and light optical pick-up head block, and consumes low power.

These objects can be accomplished by an optical disk drive apparatus for recording information on a recording surface of an optical disk in the form of information tracks and reproducing the recorded information with a light beam, comprising:

a chassis;

a rotating means mounted on said chassis for rotating said optical disk;

an objective lens for focusing said light beam on the recording surface of said optical disk and collecting a reflected light beam from the recording surface;

a rotary actuator mounted on said chassis for moving said objective lens rotatively about the center axis of rotation in the direction of crossing said information tracks for both track seeking and track following;

a supporting means mounted on said rotary actuator through a rotary attachment so as to be rotated by said rotary actuator and having a free end at which said objective lens is supported through an attachment member;

an optical block mounted on said chassis for outputting said light beam and receiving said reflected light beam; and

a light beam guiding means for guiding said light beam from said optical block to said objective lens and said reflected light beam from said optical block,

characterized in that said guiding means comprises a stick-shaped prism fixed at one end to said rotary actuator through said rotary attachment and being unsuspended at the other end adjacent to said objective lens, said stick-shaped prism having at the unsuspended end a reflective surface for reflecting said light beam guided in said stick-shaped prism toward said objective lens and for reflecting said reflected light beam from said objective lens to be guided back in said stick-shaped prism.

Brief Description of the Drawings

The above and the other objects, features and advantages will be apparent from consideration of the following description taken in connection with the accompanying drawing in which:

Fig. 1 is a cross-sectional view of a basic construction of an optical disk drive apparatus embodying this invention;

Fig. 2 is a partially perspective view of the basic construction of the optical disk drive embodying this invention, illustrated for better understanding of the embodiment shown in FIG. 1;

FIG. 3 is a cross-sectional view of another basic construction of an optical disk drive apparatus embodying this invention;

FIG. 4 is a partially perspective view of an actual construction of an optical disk drive embodying this invention.

FIGS. 5(a)—5(f) are cross-sectional views of embodiments of stick-shaped prism in cantilever form, which can be applied to the FIGS. 1, 2, 3 and 4 embodiments;

FIG. 6 is a cross-sectional view of another construction of an optical disk drive apparatus embodying this invention;

FIGS. 7(a) and 7(b) are enlarged partial views of a signal detector for the light beam, illustrating the undesirable image around the surface of the detector.

FIGS. 8(a)—8(h) are cross-sectional views of further embodiments of the stick-shaped prism in cantilever form, which can be applied to this invention.

Description of the Preferred Embodiments

Referring now to the drawings, FIG. 1 and FIG. 2 are a basic construction embodying this invention. An optical disk 31 is rotated continuously by a rotary motor 30 fixed on a chassis 32. An optical rotary pick-up head actuator comprises a rotary actuator 33 and a rotary attachment 34 which is fixed on and rotated with the rotary actuator 33. M is a center axis of the rotation. This optical rotary actuator performs movements for seeking (track access), and simultaneously for tracking (track following). A stick shaped prism 35, and parallel elastic plates 36a, 36b are attached respectively to the rotary attachment 34 by one side. The other side is unsuspended respectively. On the tip side (unsuspended side) of the parallel elastic plates 36a, 36b, an objective lens 38 and a focusing coil 39 are mounted and fixed through an attachment member 37. The focusing coil 39 is inserted into a air gap 44 formed by a focusing magnetic circuit consisted of magnetic yokes 40a, 40b, permanent magnets 41a, 41b and a magnetic yoke 42. A focusing actuator 43 comprises the focusing coil 39, which is movable, and the focusing magnetic circuit mentioned above, which is fixed on the chassis 32. A fixed optical block 45 includes most of heavy optical components such as a semiconductor laser, a collimator lens, half mirror prisms, a beam splitter prism and beam detectors (which are not illustrated in FIG. 1 and FIG. 2). A broken line L in FIG. 1 shows an axis of a light beam path.

The light beam radiated, for example, by a semiconductor laser source in the fixed optical block 45 is injected along the center axis of rotation M, and is guided into the stick-shaped prism 35, where it is reflected by a reflecting surface formed on one edge of the stick-shaped prism 35. And the light beam is once again reflected by another reflecting surface formed on the other edge (the tip edge) of the stick-shaped prism 35, and is focused upon the recording surface of the optical disk 31 through the objective lens 38. The reflective light beam from the recording surface of the optical disk 31 returns in the reverse order to the fixed optical block 45 along the axis of the light beam path shown in the broken line L in FIG. 1.

The partially perspective view shown in FIG. 2 is illustrated to bring about a better understanding for the basic construction embodying this invention. Therefore, FIG. 2 is illustrated mainly about moving parts and is omitted about the chassis 32 and the fixed optical block 45 in FIG. 1. The common numbers between FIG. 1 and FIG. 2 show same components.

In the embodiment mentioned above, the objective lens 38 is adjusted to be focused by the focusing actuator 43. The focusing coil 39, being fed the current, is moved and controlled with the attachment member 37 and the objective lens 38 to be focused in the direction perpendicular to the surface of the optical disk 31. The attachment member 37, being fastened on the parallel elastic plates 36a, 36b, is able to move freely, but within a little stroke, in that direction. On the other hand, the control for following the target track (tracking) and the control for seeking the target track (track access) are both achieved by the rotary actuator 33 only.

Consequently, the objective lens 38, the attachment member 37, the focusing coil 39, the parallel elastic plates 36a, 36b, and the stick-shaped prism 35 are controlled and moved rotatively all together by the rotary actuator 33. The attachment member 37 including the objective lens 38 and the focusing coil 39, being fastened on the parallel elastic plates 36a, 36b, is never caused to vibrate nor to resonate, and therefore is controlled with high stability under furious movement or acceleration by the rotary actuator 33, because the parallel elastic plates 36a, 36b are possessed with extremely high stiffness in the direction to seeking or tracking. And besides, the stick-shaped prism in cantilever form 35 guiding the light beam is preferable in the aspect of stiffness because the stick-shaped prism consists of one rigid stick-shaped material. Moreover, this prism has the advantage of achieving high speed track access owing to its structure of low mass (inertia), because it has no belongings except simple rigid stick-shaped material as above mentioned.

If employing a structure which includes a vacant arm as the light beam path, and includes mirrors fixed by both edges of the vacant arm instead of the stick-shaped prism, the success in reducing mass (inertia) for the structure is hardly achieved, because the thick and solid material is desirable for the arm in the aspect of stiffness, and because a heavy complicated means is desirable for fixing mirrors precisely. Consequently, the stick-shaped prism attached to a rotary actuator is preferable to the structure of vacant arm.

FIG. 3 shows another basic construction embodying this invention. In this embodiment, the fixed optical block 45 is placed under the rotary actuator 33. The arrangement is the same as that shown in FIG. 1 except the fixed optical block 45, and the operation is entirely the same as that shown in FIG. 1. The numbers of the components in FIG. 3 are common to that in FIG. 1.

FIG. 4 shows an actual construction embodying this invention. The common numbers between FIG. 4 and FIGS. 1, 2 and 3 show same components. In this embodiment in FIG. 4, the parallel elastic plates 36a, 36b are V-shaped because of increasing these stiffness in the direction of rotation (the direction of tracking or seeking). All of the components in FIG. 4 have equivalent functions to those of the basic embodiment shown in FIGS. 1, 2 and 3.

FIGS. 5(a) - 5(f) show several embodiments for the stick-shaped prism. In the embodiment in FIG. 5(a), the stick-shaped prism 51 has a sectional shape of trapezoid and has two reflecting surfaces 52, 53 on its both edges placed upon the center axis of rotation M and upon the center axis of the objective lens 38 respectively. This embodiment is applied to those in FIGS. 1 and 2. The light beam from the fixed optical block is injected along the center axis of rotation M; reflected by the reflecting surface 52; guided into the stick-shaped prism 51; reflected again by the reflecting surface 53 formed on the other edge (the tip edge) of that prism 51; and finally focused upon the optical disk through the objective lens 38. The reflective light beam from the optical disk returns in the reverse order. The axis of the light beam path is shown in a broken line L in FIG. 5(a).

In the embodiment in FIG. 5(b), the stick-shaped prism has a sectional shape of parallelogam and has also two reflecting surface 56, 57 for the light beam on its both edges placed upon the center axis of rotation M and upon the center axis of the objective lens 38 respectively. This embodiment is applied to those in FIGS. 3 and 4. The difference between the embodiment in FIG. 5(a) and that in FIG. 5(b) is the direction of the reflecting surfaces 52, 56 placed on the center axis of rotation M. Both embodiments are basic for the stick-shaped prism.

Another embodiment in FIG. 5(c) is a modification. In this embodiment, the stick-shaped prism 59 has no reflecting surface on its edge, placed on the center axis of rotation M. A reflecting mirror 60 is placed on the center axis of rotation M instead of the reflecting surface. In this case, the light beam from the fixed optical block is reflected by this reflecting mirror 60; guided into that prism 59; reflected by the reflecting surface 61 formed on the other edge (the tip edge) of that prism 59; and finally focused upon the optical disk through the objective lens 38. This embodiment suggests that the reflecting surface formed on the edge placed on the center axis of rotation M is not inevitable in the aspect of stiffness or low inertia for the stick-shaped prism. However, the embodiments in FIGS. 5(a) and 5(b) may be preferable to this embodiment in the aspect of simplification.

Still another embodiment in FIG. 5(d) is also a modification of that in FIG. 5(c). In this embodiment, the stick-shaped prism 63 becomes slender toward the tip portion (toward the side of the objective lens 38), and becomes thick near the center axis of rotation M. This shape of the stick-shaped prism 63 is preferable to that of uniform thickness in the aspect of high stiffness and low inertia. The prism mirror 64 reflects the light beam as well as the reflecting mirror 60 shown in FIG. 5(c).

A further embodiment in FIG. 5(e) is a modification of those in FIGS. 5(a) and 5(d). In this embodiment, the stick-shaped prism 67 has a sectional shape of quasitrapezoid and has two reflecting surfaces 68, 69 on its both edges. This embodiment has the advantages of those shown in FIGS. 5(a) and 5(d). A further embodiment in FIG. 5(f) is a modification of that in FIG. 5(e). In this embodiment, the stick-shaped prism 71 has a sectional shape of quasiparallelogam, and has two reflecting surfaces 72, 73. The direction of the reflecting surface 72 differs from that in FIG. 5(e).

In all of the embodiments in FIG. 5a—FIG. 5f, the stick-shaped prisms are not necessarily composed of one solid material. This prism can be composed of plural transparent materials in one body by a adhesive agent.

FIG. 6 shows another construction embodying this invention which arranges the stick-shaped prism 35 35 in the inclined posture. Basic arrangements of this embodiment are similar to those shown in FIGS. 1, 2 and 3, except the stick-shaped prism 35. The substantials of this embodiment is that the stick-shaped prism 35 is attached to the rotary element 34 in the inclined posture against the plane of its rotation, so that surfaces 80a, 80b on the stick-shaped prism 35 where the light beam passes through are not perpendicular to the axis of that light beam. If the surfaces 80a, 80b are perpendicular to the axis of the light beam, the surfaces 80a, 80b make a little surface-reflective light beams and then make undesirable images on the surface of detector, which has to detect the signals from the optical disk. Moreover, these undesirable images move rotatively on the surface of detector according to rotative movement of the stick-shaped prism 35. These undesirable images are harmful to detecting data signals or controlling closed-loop servo.

FIGS. 7(a) and 7(b) show the undesirable image above mentioned upon or around the surface of detector. FIG. 7(a) shows the undesirable image 90 upon the surface of detector 91, moving rotatively according to rotative movement of the stick-shaped prism 35. If the surfaces 80a, 80b (in FIG. 6) are perpendicular to the axis of the light beam, the undesirable image 90 is apt to move on the surface of detector 91 shown in FIG. 7(a). A proper image 92 from the surface of the optical disk is always centered on the surface of the detector 91 for all movements. If the surface 80a, 80b (in FIG. 6) are not perpendicular to the axis of the light beam, the undesirable image 93 moves around the surface of detector 91, but does not come within the range of the detector as FIG. 7(b) shows.

It will be understood that some variations can be arranged for the direction of inclined posture of the stickshaped prism from the embodiment drawn in FIG. 6, within the aim and the effect mentioned above.

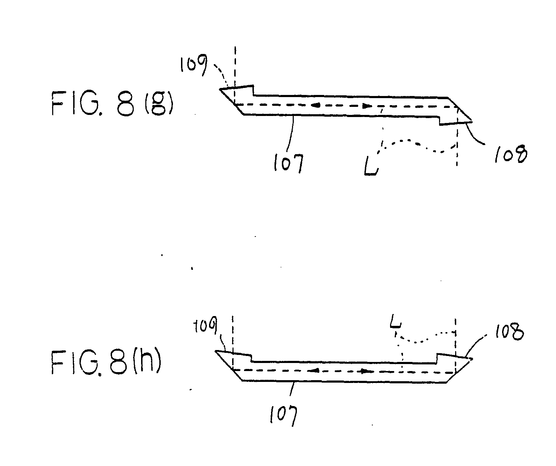

FIGS. 8(a)—8(h) show further several embodiments for the stick-shaped prism. All of these embodiments are relevalent to that shown in FIG. 6. Instead of the stick-shaped prism, being in the inclined posture (FIG. 6), these embodiments in FIGS. 8(a)—8(h) have inclined surfaces on themselves where the light beam passes through, so that these inclined surfaces are not perpendicular to the axis of that light beam. The effect by employing these construction is the same as that in FIG. 6. In the embodiments in FIG. 8(a)—FIG. 8(d), the inclined surfaces 101, 102, where the light beam passes through, are formed on the stick-shaped prism 100. A broken line L is the axis of the light beam. In the embodiments in FIGS. 8(e), 8(f), the direction of the inclined surfaces 105, 106 is different from FIG. 8(a)—FIG. 8(d), and is formed by scraping off the portion of the stick-shaped prism where the light beam passes through. In the embodiments in FIGS. 8(g), 8(h), the portion of the inclined surfaces 108, 109 is stretched out from the stick-shaped prism 107.

This invention for the optical disk drive has various advantages as follows;

(1) According to the invention, the optical and mechanical system for the optical pick-up head block comprising the rotary actuator 33, the rotary attachment 34, the stick-shaped prism 35 fixed to the rotary attachment 34, the parallel elastic plates 36a, 36b, the objective lens 38, the attachment member 37 and the focusing coil 39 can be remarkably reduced in its moving inertia, because the mass of the objective lens 38, the attachment member 37 and the focusing coil 39, which are dominant in inertia, is supposed to be 1—2 gram in weight, and because the parallel elastic plates 36a, 36b are extremely light in weight due to their thin construction, and especially because the mass of the stick-shaped prism 35 is light in weight owing to its simple structure as above-mentioned. The mass of the rotary actuator 33 and the rotary attachment 34 is apt to be excessive in weight, but these inertia for rotary movement is never excessive because these mass are concentrated near the center axis of rotation M. Supposing all of the inertia are converted into a point mass on the tip portion (the portion of the objective lens 38) for linear motion so as to be compared with the prior art, the point mass for linear motion is supposed to be 10—20 gram in weight. It will be less than 1/10 of the moving mass in the prior art. Consequently, large acceleration can be achieved using the rotary actuator having small torque according to the invention, and moreover, high-speed track access, reduction of power consumption and compactness for the system can be easily achieved.

(2) Even if the large acceleration is worked to the rotary actuator and the optical system, high-speed randam access and fine trackability will be easily achieved with good stability according to the invention, because the stick-shaped prism 35 and the parallel elastic plates 36a, 36b never vibrate or resonate against the furious movement owing to their high stiffness in the direction of the movement, and because the optical axis of the objective lens 38 never incline transiently.

(3) The stick-shaped prism in cantilever form with the ununiform thickness above-mentioned is of great use because of the advantage of increasing its stiffness without increasing its moving inertia.

(4) The structures or the arrangements in the inclined posture for the stick-shaped prism not bringing about the undesirable surface-reflective light beam that may make undesirable images on the detector's surface are of great use in the aspect of controlling closed-loop servo or detecting data signals.

**Claims**

1. An optical disk drive apparatus for recording information on a recording surface of an optical disk (31) in the form of information tracks and reproducing the recorded information with a light beam comprising:
a chassis (32);
a rotating means (30) mounted on said chassis (32) for rotaing said optical disk (31);
an objective lens (38) for focusing said light beam on the recording surface of said optical disk (31) and collecting a reflected light beam from the recording surface;.
a rotary actuator (33) mounted on said chassis (32) for moving said objective lens (38) rotatively about the center axis of rotation in the direction of crossing said information tracks for both track seeking and track following;
a supporting means (36a, 36b) mounted on said rotary actuator (33) through a rotary attachment (34) so as to be rotated by said rotary actuator (33) and having a free end at which said objective lens (38) is supported through an attachement member (37);
an optical block (45) mounted on said chassis (32) for outputting said light beam and receiving said reflected light beam; and
a light beam guiding means (35) for guiding said light beam from said optical block (45) to said objective lens (38) and said reflected light beam from said optical block (45).
characterized in that said guiding means (35) comprises a stick-shaped prism (35) fixed at one end to said rotary actuator (33) through said rotary attachment (34) and being unsuspended at the other end adjacent to said objective lens (38), said stick-shaped prism (35) having at the unsuspended end a reflective surface for reflecting said light beam guided in said stick-shaped prism (35) toward said objective lens (38) and for reflecting said reflected light beam from said objective lens (38) to be guided back in said stickshaped prism (35).

2. The optical disk drive apparatus as defined in claim 1, wherein the fixed end of said stick-shaped prism (35) is disposed on the center axis of rotation of said rotary actuator (33), and said stick-shaped prism (35) has at the fixed end a reflective surface for reflecting said light beam outputted from said optical block (45) along the center axis of rotation of said rotary actuator (33) to be guided in said stickshaped prism (35) and for reflecting said reflected light beam guided back in said stick-shaped prism (35) toward said optical block (45) along the center axis of rotation of said rotary actuator (33).

3. The optical disk drive apparatus as defined in claim 1, wherein said stick-shaped prism (35) has a shape of non-uniform thickness so that said stick-shaped prism is slender at the side of said objective lens (38), and is thick at the side of said rotary actuator (33).

4. The optical disk drive apparatus as defined in claim 1, wherein said stick-shaped prism (35) is mounted upon said rotary actuator (33) through said rotary attachment (34) in the inclined posture against the plane of its rotation, so that surfaces on said stick-shaped prism (35) where said light beam passes through are not perpendicular to the axis of said light beam.

5. The optical disk drive apparatus as defined in claim 1, wherein said stick-shaped prism (35) is equipped with inclined surfaces on itself where said light beam passes through, said inclined surfaces being formed in inclined posture against the plane of said stick-shaped prism's rotation so that said inclined surfaces are not perpendicular to the axis of said light beam.

6. The optical disk drive apparatus as defined in claim 5, wherein said inclined surfaces on said stick-shaped prism (35) are formed by scraping off the portions of said stick-shaped prism (35) where said light beam passes through.

7. The optical disk drive apparatus as defined in claim 5, wherein said inclined surfaces on said stickshaped prism (35) are formed by stretching out the portions of said stick-shaped prism (35) where said light beam passes through.

8. The optical disk drive apparatus as defined in claim 1, wherein said supporting means (36a, 36b) comprises parallel elastic plates (36a, 36b), and wherein said apparatus further comprises: a stationary magnetic circuit (40a, 40b, 41a, 41b, 42) mounted on said chassis (32) and comprising a plurality of magnetic yokes (40a, 40b, 42) and a plurality of permanent magnets (41a, 41b) for forming an air gap (44); and a focusing coil (39) mounted on said attachement member (37) so as to be located in said air gap (44) and being energized by a current to move said objective lens (38) for focusing.

9. The optical disk drive apparatus as defined in claim 8, wherein said parallel elastic plates (36a, 36b) are V-shaped parallel elastic plates (36a, 36b) which are narrower at the free end side than the mounted end side.

**Patentansprüche**

1. Antriebsapparat für eine optische Scheibe zur Speicherung von Informationen auf einer Speicherfläche einer optischen Scheibe (31) in Form von Informationsspuren und zur Wiedergabe der gespeicherten Informationen mit einem Lichtstrahl, mit:
einem Chassis (32);
einer Rotationseinrichtung (30), befestigt auf dem Chassis (32) zur Rotation der optischen Scheibe (31);
einer Objektivlinse (38) zur Fokussierung des Lichtstrahls auf die Speicherfläche der optischen Scheibe (31) und zum Sammeln eines reflektierten Lichtstrahls von der Speicherfläche;
einer Drehbetätigungseinrichtung (33), befestigt an dem Chassis (32) zur rotierenden Bewegung ihrer Objektivlinse (38), um die Mitteldrehachse in der Richtung des Kreuzens der Informationsspuren sowohl für das Spursuchen als auch für das Spurabtasten;

einer Lagerungseinrichtung (36a, 36b), befestigt durch eine Drehbefestigung (34) auf der Drehbetätigungseinrichtung (33), so daß sie durch die Drehbetätigungseinrichtung (33) rotierend bewegt wird

und ein freies Ende besitzt, an der die Objektivlinse (38) durch ein Befestigungsteil (37) gelagert ist;

einem optischen Block (45), befestigt auf dem Chassis (32) zur Ausgabe des Lichtstrahls und zur Aufnahme des reflektierten Lichtstrahls; und

einer Lichtstrahl-Führungseinrichtung (35) zum Führen des Lichtstrahls von dem optischen Block (45) zu der Objektivlinse (38) und des reflektierten Lichtstrahls von dem optischen Block (45),

dadurch gekennzeichnet, daß die Führungseinrichtung (35) aufweist ein stabförmiges Prisma (35), befestigt an einem Ende durch die Drehbefestigung (34) an der Drehbetätigungseinrichtung (33) und nicht aufgehängt am anderen Ende benachbart zu der Objektivlinse (38), wobei das stabförmige Prisma (35) an seinem nicht aufgehängten Ende eine reflektierende Oberfläche aufweist zum Reflektieren des Lichtstrahls, der in dem stabförmigen Prisma (35) zu der Objektivlinse (38) geführt wird und um den reflektierten Lichtstrahl von der Objektivlinse (38) zu reflektieren, um in dem stabförmigen Prisma (35) zurückgeführt zu werden.

2. Antriebsapparat für eine optische Scheibe, wie in Anspruch 1 angegeben, bei dem das feste Ende des stabförmigen Prismas (35) auf der Mitteldrehachse der Drehbetätigungseinrichtung (33) angeordnet ist und das stabförmige Prisma (35) an dem festen Ende eine reflektierende Oberfläche aufweist, zum Reflektieren des Lichtstrahls, der von dem optischen Block (45) ausgegeben wird, entlang der Mitteldrehachse der Drehbetätigungseinrichtung (33), um in dem stabförmigen Prisma (35) geführt zu werden und zum Reflektieren des dem stabförmigen Prisma (35) zurückgeführten reflektierten Lichtstrahls zu dem optischen Block (45) entlang der Mitteldrehachse der Drehbetätigungseinrichtung (33).

3. Antriebsapparat für eine optische Scheibe, wie in Anspruch 1 angegeben, bei dem das stabförmige Prisma (35) eine Form von nicht gleichmäßiger Dicke aufweist, so daß das stabförmige Prisma an der Seite der Objektivlinse (38) schlank ist und an der Seite der Drehbetätigungseinrichtung (33) dick ist.

4. Antriebsapparat für eine optische Scheibe, wie in Anspruch 1 angegeben, bei dem das stabförmige Prisma (35) auf der Drehbetätigungseinrichtung (33) durch die Drehbefestigung (34) in der gegen seine Rotationsebene geneigten Lage befestigt ist, so daß die Oberflächen an dem stabförmigen Prisma (35), durch die der Lichtstrahl hindurchgeht, nicht rechtwinklig zur Achse des Lichtstrahls sind.

5. Antriebsapparat für eine optische Scheibe, wie in Anspruch 1 angegeben, wobei das stabförmige Prisma (35) an sich selbst, wo der Lichtstrahl hindurchgeht, mit geneigten Oberflächen versehen ist, wobei die geneigten Oberflächen in geneigter Lage gegen die Ebene der Rotation des stabförmigen Prismas ausgebildet sind, so daß die geneigten Oberflächen nicht rechtwinklig zur Achse des Lichtstrahls verlaufen.

6. Antriebsapparat für eine optische Scheibe, wie in Anspruch 5 angegeben, bei dem die geneigten Oberflächen an dem stabförmigen Prisma (35) durch Wegschaben der Abschnitte des stabförmigen Prismas (35), durch die der Lichtstrahl hindurchgeht, gebildet sind.

7. Antriebsapparat für eine optische Scheibe, wie in Anspruch 5 angegeben, bei dem die geneigten Oberflächen an dem stabförmigen Prisma (35) durch Herausstrecken der Abschnitte des stabförmigen Prismas (35), durch die der Lichtstrahl hindurchgeht, gebildet sind.

8. Antriebsapparat für eine optische Scheibe, wie in Anspruch 1 angegeben, bei dem die Lagerungseinrichtung (36a, 36b) aufweist parallele elastische Platten (36a, 36b), und wobei der Apparat außerdem aufweist: einen stationären Magnetkreis (40a, 40b, 41a, 41b, 42), der an dem Chassis (32) befestigt ist und aufweist eine Mehrzahl von Magnetjochen (40a, 40b, 42) und eine Mehrzahl von Permanentmagneten (41a, 41b) zur Bildung eines Luftspaltes (44); und eine Fokussierwicklung (39), befestigt an dem Befestigungsteil (37), um in dem Luftspalt (44) angeordnet zu sein und die durch einen Strom angeregt wird, um die Objektivlinse (38) zur Fokussierung zu bewegen.

9. Antriebsapparat für eine optische Scheibe, wie in Anspruch 8 angegeben, bei dem die parallelen elastischen Platten (36a, 36b) V-förmige, parallele elastische Platten (36a, 36b) sind, die schmaler an der freien Endseite als an der befestigten Endseite sind.

**Revendications**

1. Appareil à disque optique destiné à l'enregistrement d'informations sur une surface d'enregistrement d'un disque optique (31) sous forme de pistes d'informations, et de lecture des informations enregistrées à l'aide d'un faisceau lumineux, comprenant:

un châssis (32),

un dispositif (30) monté sur le châssis (32) et destiné à faire tourner le disque optique (31),

un objectif (38) destiné à focaliser le faisceau lumineux sur la surface d'enregistrement du disque optique (31) et collectant le faisceau lumineux réfléchi par la surface d'enregistrement,

un organe rotatif de commande (33) monté sur le châssis (32) et destiné à déplacer l'objectif (38) en rotation autour de l'axe central de rotation dans la direction qui recoupe les pistes d'informations, à la fois pour la recherche d'une piste et la poursuite d'une piste,

un dispositif de support (36a, 36b) monté sur l'organe rotatif de commande (33) par l'intermédiaire d'un organe rotatif de fixation (34) afin qu'il soit entraîné en rotation par l'organe rotatif de commande (33) et ayant une extrémité libre sur laquelle l'objectif (38) est supporté par un organe de fixation (37),

un bloc optique (45) monté sur le châssis (32) et destiné à transmettre le faisceau lumineux et à recevoir le faisceau lumineux réfléchi, et

un dispositif (35) de guidage de faisceau lumineux provenant du bloc optique (45) vers l'objectif (38) et du faisceau lumineux réfléchi provenant du bloc optique (45),

caractérisé en ce que le dispositif de guidage (35) comporte un prisme en forme de barreau (35) fixé à une première extrémité à l'organe rotatif (33) de commande par l'organe rotatif (34) de fixation et qui n'est pas suspendu à l'autre extrémité adjacente à l'objectif (38), le prisme en forme de barreau (35) ayant, à l'extrémité non suspendue, une surface destinée à réfléchir le faisceau lumineux guidé dans le prisme (35) vers l'objectif (38) et à réfléchir le faisceau lumineux réfléchi provenant de l'objectif (38) afin qu'ils soient guidés dans le prisme (35).

2. Appareil à disque optique selon la revendication 1, dans lequel l'extrémité fixe du prisme en forme de barreau (35) est disposée sur l'axe central de rotation de l'organe rotatif (33) de commande, et le prisme en forme de barreau (35) a, à l'extrémité fixe, une surface destinée à réfléchir le faisceau lumineux transmis par le bloc optique (45) suivant l'axe central de rotation de l'organe rotatif (33) de commande afin qu'il soit guidé dans le prisme en forme de barreau (35), et à réfléchir le faisceau lumineux réfléchi renvoyé dans le prisme en forme de barreau (35) vers le bloc optique (45) le long de l'axe central de rotation de l'organe rotatif (33) de commande.

3. Appareil à disque optique selon la revendication 1, dans lequel le prisme en forme de barreau (35) a une configuration d'épaisseur non uniforme si bien que le prisme est plus mince du côté de l'objectif (38) et plus épais du côté de l'organe rotatif (33) de commande.

4. Appareil à disque optique selon la revendication 1, dans lequel le prisme en forme de barreau (35) est monté sur l'organe rotatif de commande (33) par l'intermédiaire de l'organe rotatif (34) de fixation avec une position inclinée par rapport à son plan de rotation, si bien que les surfaces formées sur le prisme (35), à l'endroit où passe le faisceau lumineux, ne sont pas perpendiculaires à l'axe du faisceau lumineux.

5. Appareil à disque optique selon la revendication 1, dans lequel le prisme en forme de barreau (35) a des surfaces inclinées formées sur lui-même à l'endroit où le faisceau lumineux le traverse, les surfaces inclinées étant formées en position inclinée par rapport au plan de rotation du prisme en forme de barreau afin que les surfaces inclinées ne soient pas perpendiculaires à l'axe du faisceau lumineux.

6. Appareil à disque optique selon la revendication 5, dans lequel les surfaces inclinées formées sur le prisme en forme de barreau (35) sont réalisées par enlèvement de parties du prisme (35) à l'endroit où le faisceau lumineux le traverse.

7. Appareil à disque optique selon la revendication 5, dans lequel les surfaces inclinées du prisme en forme de barreau (35) sont formées par étirage de parties du prisme en forme de barreau (35) vers l'extérieur à l'endroit où le faisceau lumineux le traverse.

8. Appareil à disque optique selon la revendication 1, dans lequel le dispositif de support (36a, 36b) comporte des plaques élastiques parallèles (36a, 36b), et dans lequel l'appareil comporte en outre un circuit magnétique fixe (40a, 40b, 41a, 41b, 42) monté sur le châssis (32) et comprenant plusieurs armatures magnétiques (40a, 40b, 42) et plusieurs aimants permanents (41a, 41b) destinés à former un entrefer (44), et une bobine de focalisation (39) montée sur l'organe de fixation (37) afin qu'elle soit placée dans l'entrefer (44) et soit excitée par un courant en provoquant ainsi la focalisation de l'objectif (38)

9. Appareil à disque optique selon la revendication 8, dans lequel les plaques élastiques parallèles (36a, 36b) sont des plaques élastiques parallèles à section en V (36a, 36b) qui sont plus étroites du côté de l'extrémité libre que du côté de l'extrémité de montage.

FIG. 1

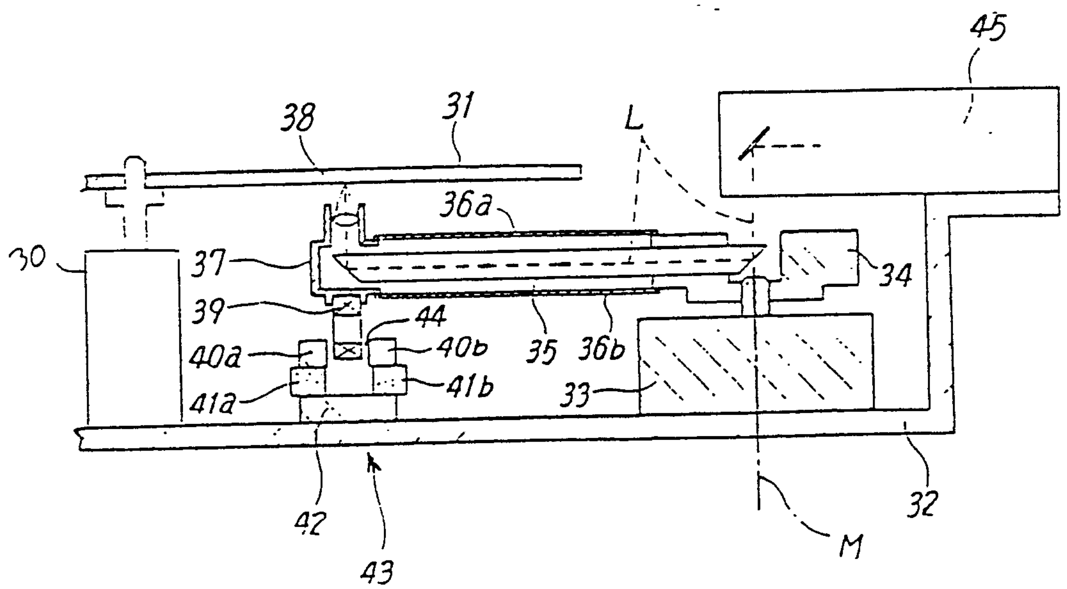

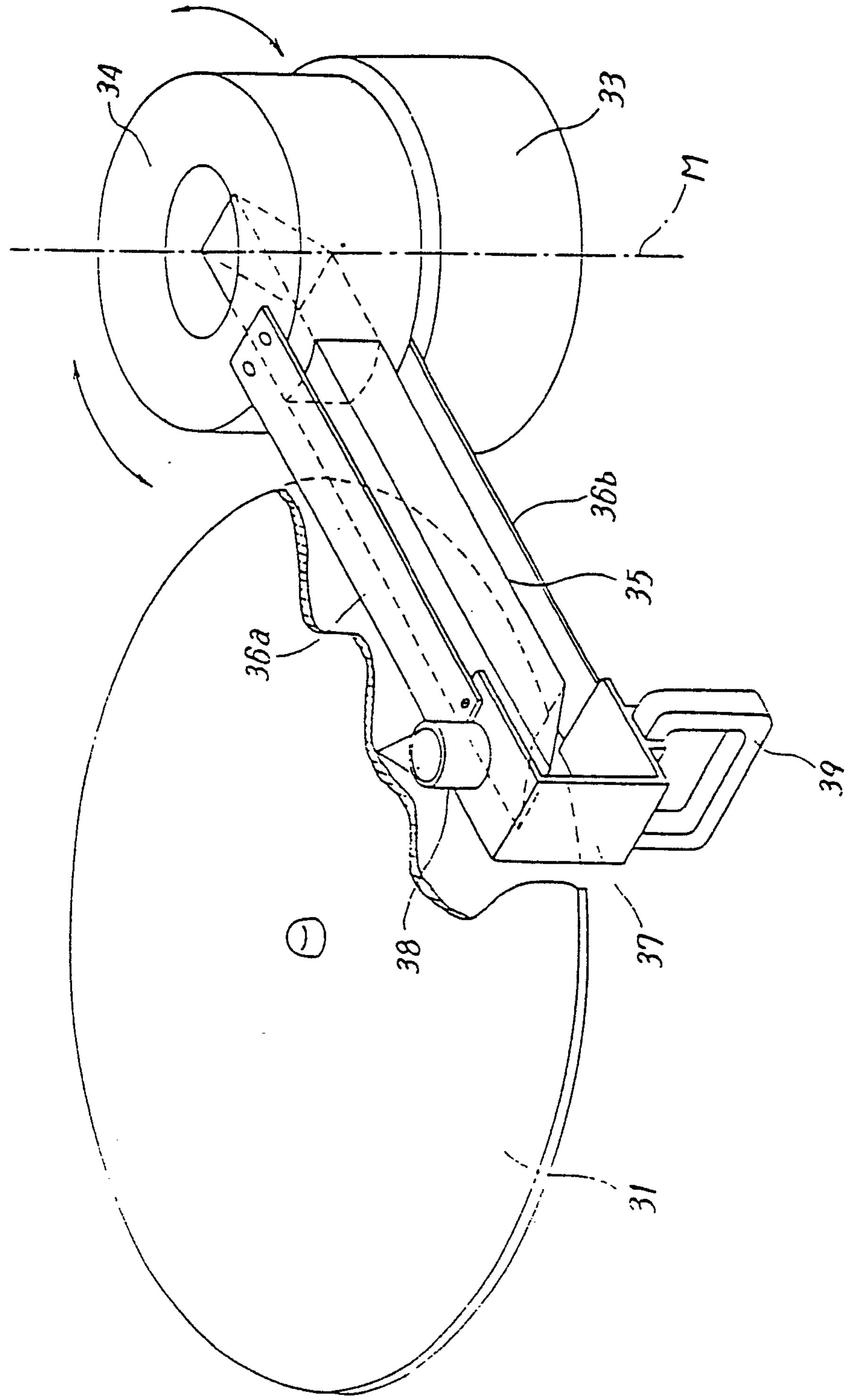


FIG. 2

FIG. 3

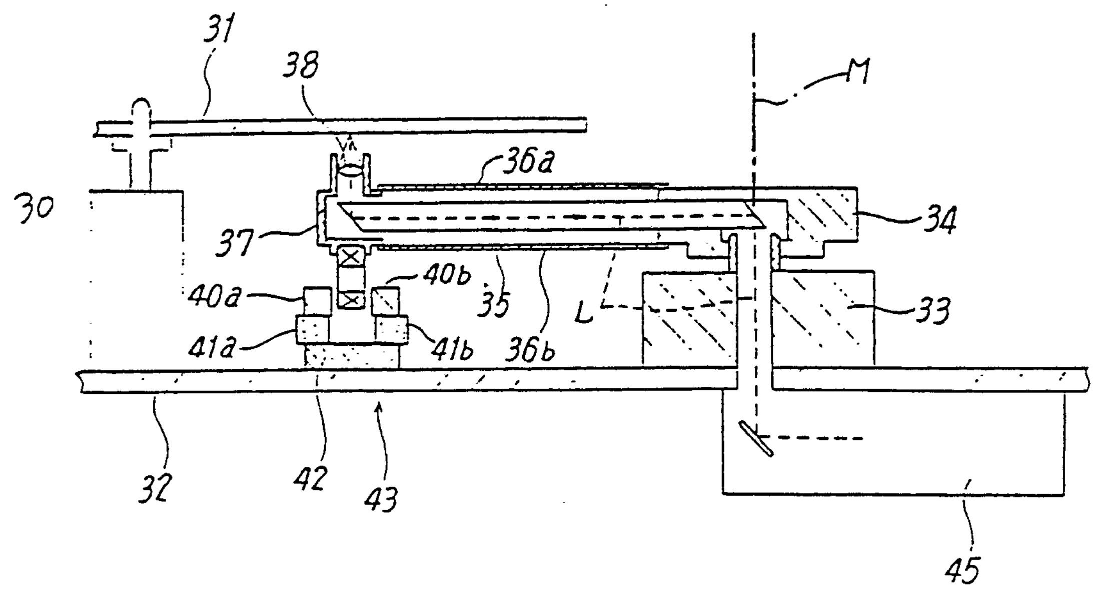

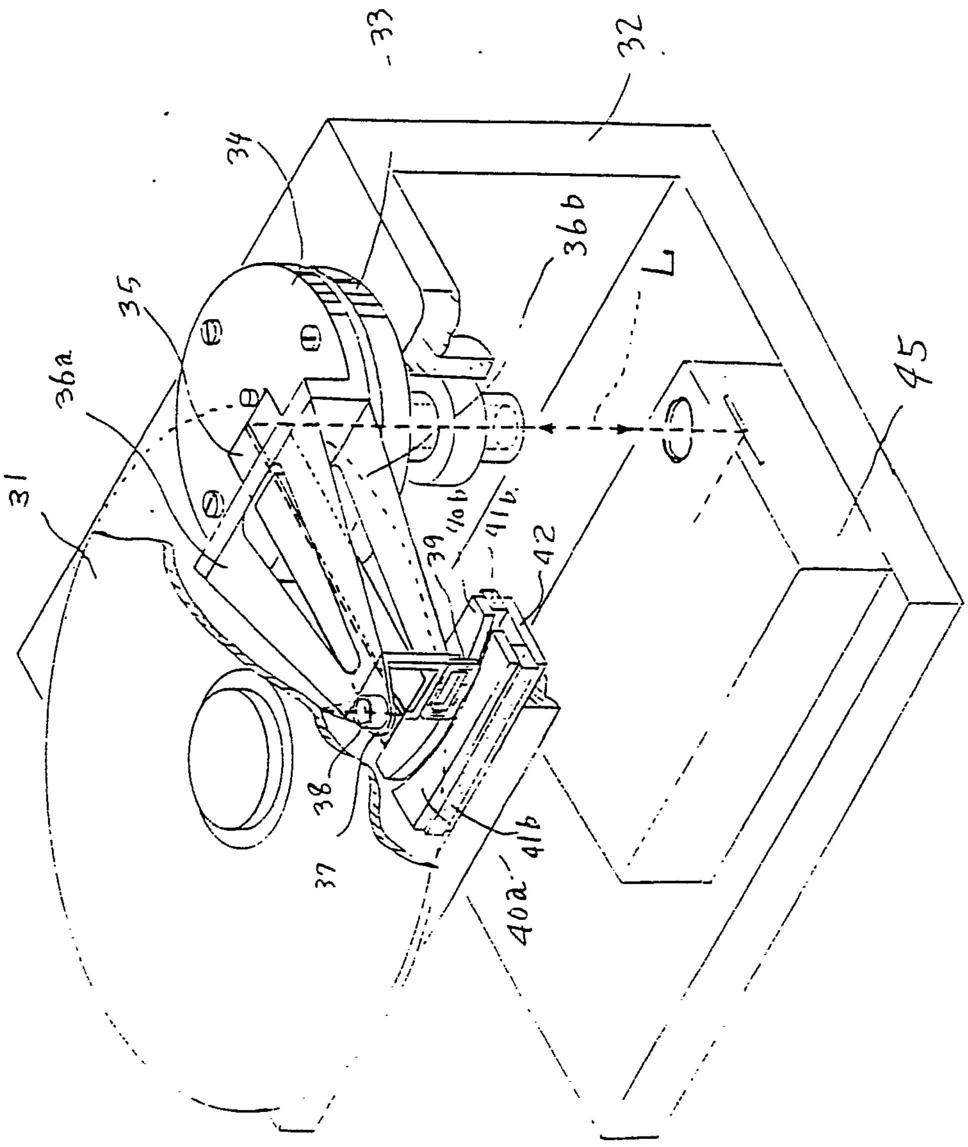


FIG. 4

FIG. 5(a)

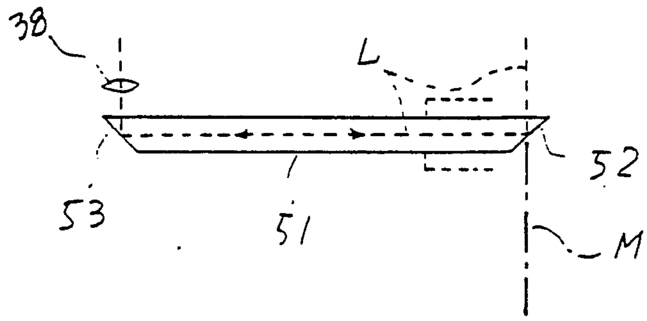


FIG. 5 (b)

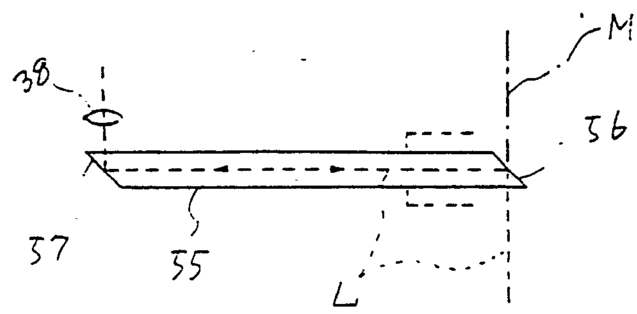


FIG. 5(c)

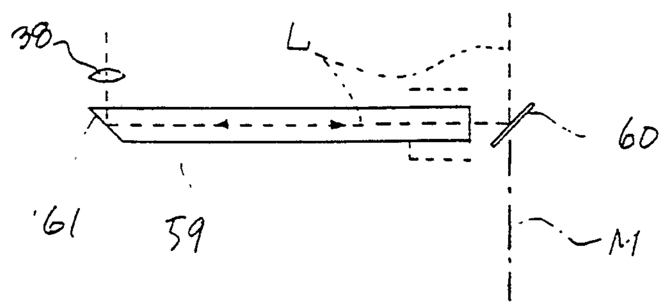

FIG. 5(d)

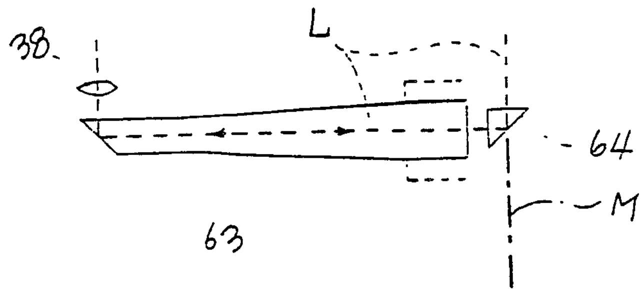


FIG. 5(e)

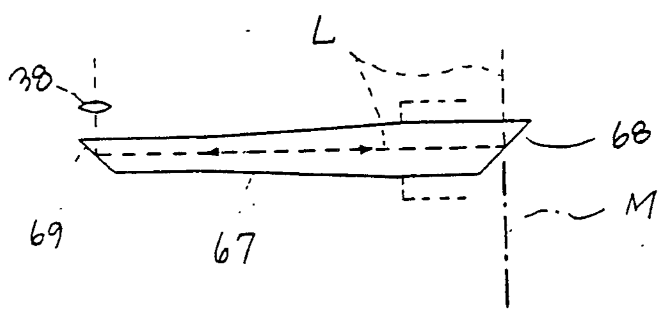


FIG. 5(f)

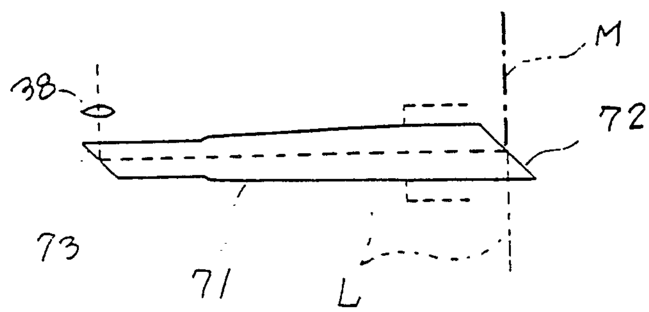

FIG. 6

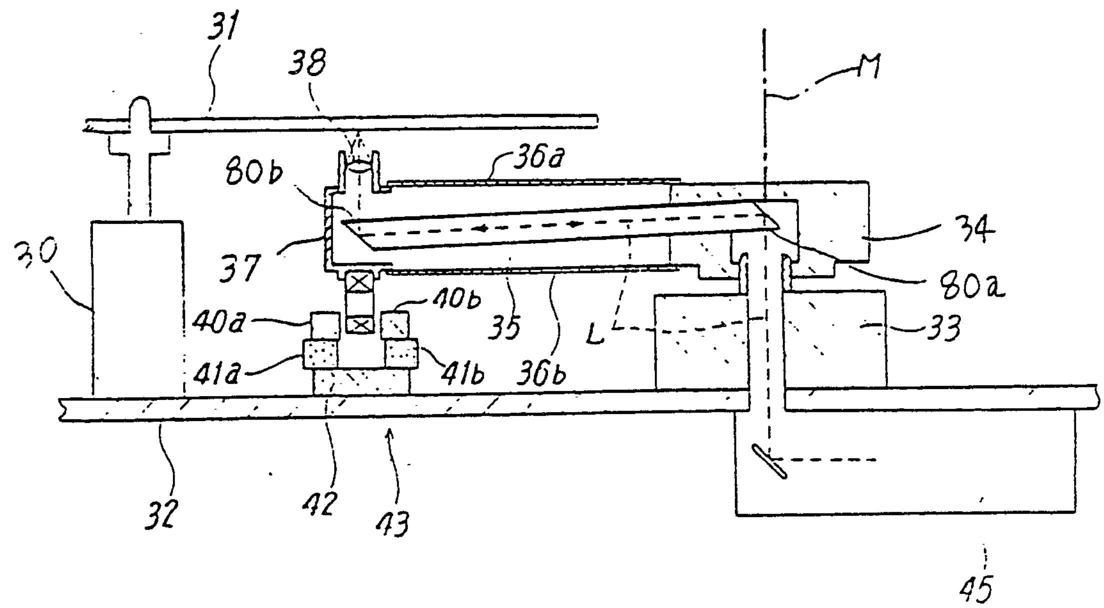

FIG. 7(a)

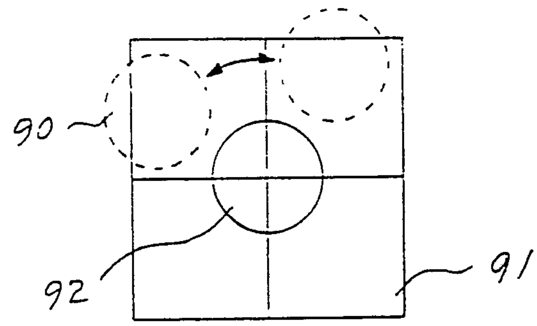


FIG. 7(b)

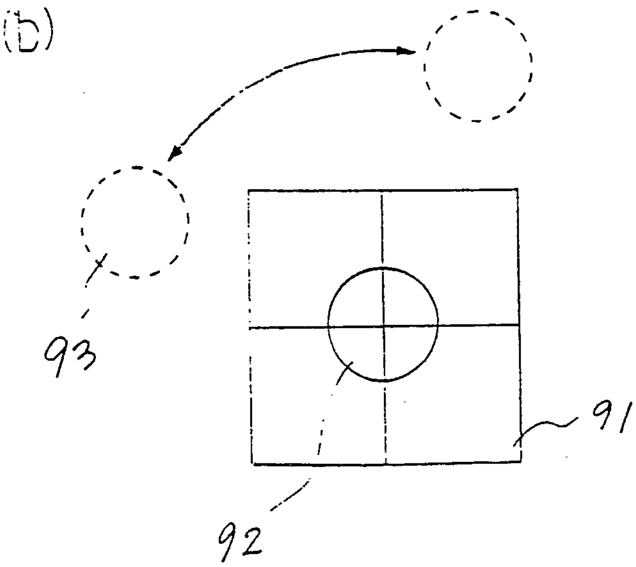

FIG. 8(a)

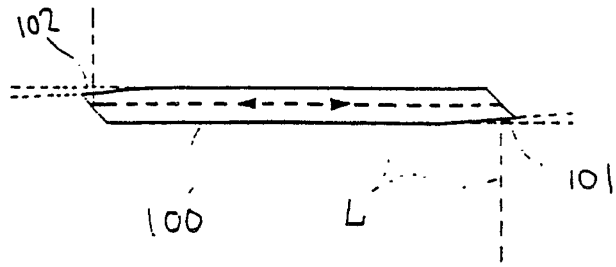


FIG. 8(b)

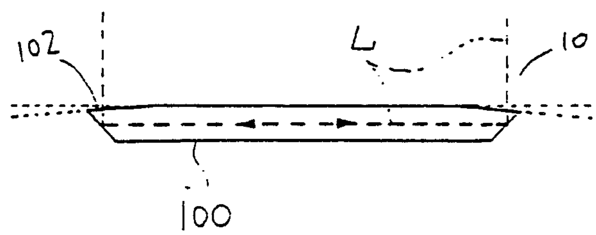


FIG. 8(c)

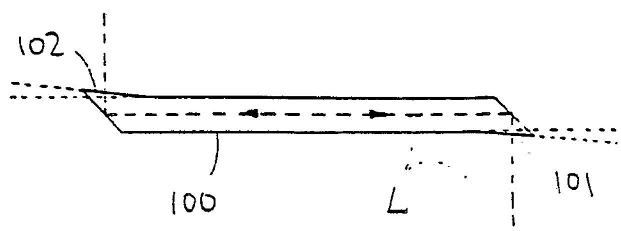

FIG. 8(d)

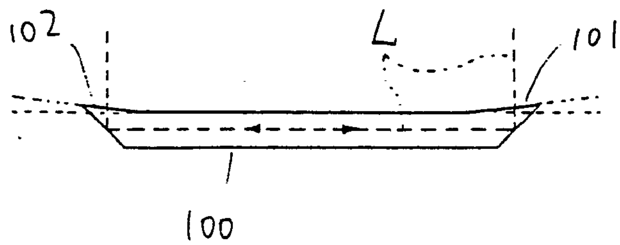


FIG. 8(e)

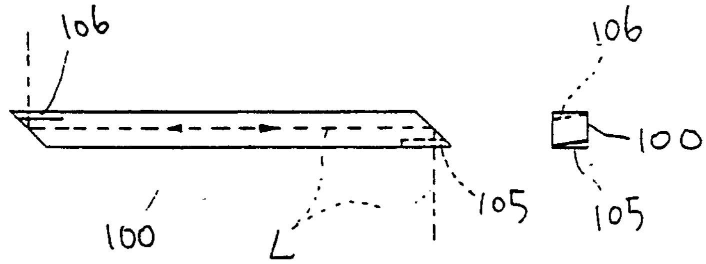


FIG. 8(f)

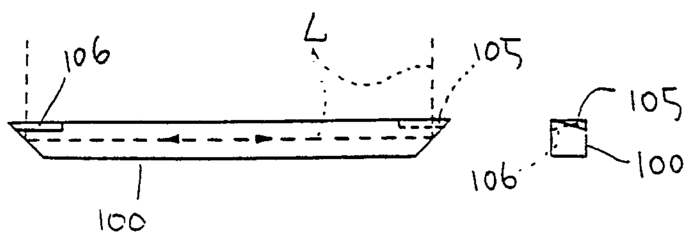

FIG. 8(g)

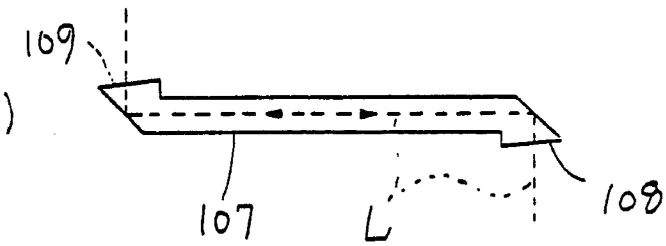


FIG. 8(h)